# EUROPEAN PATENT APPLICATION

(11) **EP 4 718 374 A1**
(43) Date of publication of application: **01.04.2026**
(21) Application number: 24203566.5
(22) Date of filing: 30.09.2024
(51) Int. Cl.: G06T 7/00

(54) **DETECTION OF SHEET ANOMALIES FOR LASER MACHINE**

(71) Applicant: Bystronic Laser AG, 3362 Niederönz (CH)
(72) Inventor: Skovolas, Konstantinos, 8005 Zürich (CH); Di Pasquale, Nino, 3012 Bern (CH); Lüdi, Andreas, 3400 Burgdorf (CH)
(74) Representative: Schwarz, Claudia

(57) **Abstract**

The invention pertains to a detection method for identifying anomalies on a material intended for laser processing. The method involves the acquisition of image data of the material via an input interface connected to an optical sensor system. This image data is then processed using a classification algorithm that is embedded within a trained neural network. The outcome of this process is a classification result, which is made available through an output interface. This method provides an efficient and accurate means of detecting irregularities on materials before they undergo laser processing, thereby enhancing the overall quality and efficiency of the laser processing operation.

## Description

The present invention is within the field of laser processing and in particular relates to a detection method for detecting anomalies on the material to be processed, to a respective processing device, to a training method for training a neural network to be used in said detection method, to a laser processing system and to a computer program and a computer program product.

Laser processing machines are widely used in various industries for cutting, welding, drilling, and engraving materials. These machines operate by focusing a high-power laser beam onto the material to be processed, causing it to melt, burn, vaporize, or undergo other physical or chemical changes. The laser beam is typically controlled by a computer numerical control (CNC) system, which allows for precise and repeatable movements of the laser beam along predetermined paths. The quality of the processed material can be affected by various factors, including the presence of anomalies on the material surface. These anomalies can include, for example, scratches, rust, oil, water, tape, or markers. If not detected and addressed, these anomalies can lead to defects in the processed material, reducing its quality and potentially leading to product failure. To ensure the quality of the processed material, it is necessary to detect and address these anomalies before or during the laser processing operation. This is typically done by inspecting the material surface using various inspection techniques, separate from the laser processing workflow, such as visual inspection, ultrasonic testing, eddy current testing, and others. However, these techniques can be time-consuming, labor-intensive, and prone to human error.

In the current state of the art, known loading systems for laser processing machines are blind to anomalies on the material to be processed. This lack of anomaly detection can lead to inefficient processing, potential damage to the machine, and subpar final products. Anomalies can include tapes, films, colors, markers, scratches, and/or rust, dirt, moss, oil, and/or water on the material, such as sheet material, to be processed.

In recent years, machine learning techniques, such as neural networks, have been increasingly used for anomaly detection in various applications. These techniques can automatically learn to recognize complex patterns in data and make accurate predictions based on these patterns.

In the context of laser processing, machine learning techniques can be used to automatically detect anomalies on the material surface based on image data captured by an optical sensor system. This can significantly improve the efficiency and accuracy of the anomaly detection process, leading to improved quality of the processed material.

Advancements in machine development are aimed for enhancing machine autonomy to streamline production with a reduced workforce. Consequently, the ongoing enhancement of autonomous monitoring for machines, systems, and processes is imperative. The significance of appropriate sensor technology and intelligence is on the rise. This trend is also evident in particular for flatbed cutting machines, including their loading and unloading systems, which are progressively embracing greater autonomy. Notably, the laser process, e.g., the cutting process, has experienced significant steps in autonomy in recent years, with procedures increasingly conducted without direct human intervention. However, the loading and unloading of sheet metal on the cutting machine is trailing behind in this autonomous evolution.

A significant gap in the machine's autonomy is particularly the loading of metal plates/sheets to be processed. This is usually done blind. However, unfortunately, sheets are often not as expected but may show several deviations from the expected, like anomalies, which may materialize in form of defects and other deviations. The storage of sheet metals is often in the outside which can be the reason that the surface may be rusty, dirty or may even have moss on it. Further, some sheet surfaces have colored marks, colors in general and/or tapes. Often, surfaces also have water and/or oil or are scratched.

All these anomalies affect the laser processing capabilities. Knowing the type and the location of the anomaly enables to take countermeasures as to remove it, to adapt the laser processing plan, in particular the cutting plan or to adapt the cutting parameters.

In prior art, US2023324889 suggests, using a CCD-camera to detect physical workpiece properties (e.g. thickness and material type) which are defined in the cutting plan. US2017109874 discloses the use of a camera and an illumination to detect material type and surface conditions, including oxidation, roughness, coatings of the surface, etc. As the monitoring is done with a small field of view, typically with the cutting head camera looking through the nozzle opening, the detection is possible only via spatial frequency domain analysis, which is suited for microscopic views. The monitoring is done while cutting, i.e. in-process, and it is suggested to possibly adapt the cutting parameters if deviations from the norm are identified.

As described above, machines and their loading systems shall become more and more autonomous, requiring more and more sensors for condition monitoring and a respective intelligence. Usually, today the loading system and/or the laser processing machine are blind (meaning blind or insensitive with respect to detection of the state or condition of the material to be processed), especially at the time of loading.

An object of the present invention therefore is to eliminate the aforementioned problems in prior art. In particular, the loading process for laser processing should be improved before laser processing starts to be able to detect anomalies of the material to be processed as early as possible and to provide an option to remove the same in order to improve laser processing efficiency and quality.

In the following, the invention will be described with respect to the claimed detection method first. Features, advantages or alternative embodiments, mentioned with respect to the method can be assigned to the other claimed objects (e.g. the computer program or the processing device, or the system or a computer program product) and vice versa. In other words, the system, apparatus or device can be improved with features described or claimed in the context of the method and vice versa. In this case, the functional features of the method are embodied by structural units of the apparatus or device or system and vice versa, respectively. The method may refer to a software implementation and the device may refer to a hardware implementation. Generally, in computer science a software implementation and a corresponding hardware implementation (e.g. as an embedded system) are equivalent. Thus, for example, a method step for "storing" data may be performed with a storage unit and respective instructions to write data into the storage. For the sake of avoiding redundancy, although the device may also be used in the alternative embodiments described with reference to the method, these embodiments are not explicitly described again for the device. In principle, the respective device or apparatus claim is configured to carry out the claimed method.

According to a first aspect the invention relates to a detection method for detecting anomalies on or at the material to be processed (e.g., cut) , in particular on the surface of the material to be processed, by means of a laser processing machine, in particular a laser cutting machine, more in particular, a flatbed laser cutting machine. The method may comprise to receive image data of the material (in particular sheet material and more in particular sheet metal) to be processed captured by means of an input interface to an optical sensor system, which may be implemented or may comprise at least one camera. The at least one camera may be configured to capture a macroscopic view with a large field of view, with camera(s) seeing large parts of the whole sheet arranged over the support table, in particular a shuttle table. Further, the method may process the received image data by using a classification algorithm embedded in a trained neural network. After this, a classification result may be provided on an output interface.

In particular the present invention relates detecting anomalies on metal sheets to be cut by a laser processing machine. The system uses an optical sensor system to capture image data of the metal sheet, being placed on the support table, wherein the captured image data is then processed using a classification algorithm embedded in a trained neural network. The classification result is then provided on an output interface. The system can be used to control an anomaly countermeasure algorithm, which can include functions such as anomaly removal, machine stop, material exchange, adaption of the processing plan, or adaption of processing parameters of the laser processing machine. The invention also describes a method for training the neural network used in the detection method, where the training data is synthetically and automatically generated.

The processing of the received image data by using the classification algorithm, and in particular the analysis, is not done in the spatial frequency domain, but in the spatial or image or in a latent domain of the image. The processing of the received image data by using the classification algorithm is done well before cutting, in particular during or after loading the material to be processed. This has the advantage of being more flexible and more effective countermeasures can be considered and/or (automatically or semi-automatically) triggered prior to laser processing starts in case of detected anomalies.

A detection method, a processing device and a laser processing system that can detect anomalies as tapes, films, colors, markers, scratches, and/or rust, dirt, moss, oil, and/or water on the material, e.g., sheet material, to be processed, in particular to be cut on a support (e.g. of a loading/unloading system) or on a shuttle or processing table before laser processing, enables the processing system to react appropriately or to remove the anomaly in case that there are deviations from the norm and/or expected state of the material.

The laser processing machine may be a laser cutting machine and in particular a flatbed laser cutting machine for cutting sheet workpieces, in particular metal sheets. Alternatively, the laser processing machine may be configured for welding, marking, engraving, and/or material surface processing.

The material to be processed may be sheet material, in particular metal, like steel or alloy in different widths and/or dimensions.

The optical sensor system may comprise at least 1 camera, preferably a set of cameras in the range of 2 to 10, more preferably 5. The cameras may be arranged in line on a movable carrier, which is movable in orthogonal direction (orthogonal to an axis in which the cameras are mounted). The focal plane of the camera(s) are essentially parallel to the support table, in particular cutting table, which may be part of a loading system.

The optical sensor system may be or comprise at least one camera with a macroscopic field of view for detecting the whole or at least parts of the support table (e.g., over 50% or even over 80%) or of the material to be cut in one single shot.

For example, with one single shot it is possible to detect > 100 cm2, which is clearly much more than what is possible with a cutting head camera. The optical sensor system is typically not a cutting head camera, which inevitably has a microscopic resolution as it is arranged in the laser processing head. Alternatively or cumulatively, the method may receive positioning data, indicating, where exactly the material to be processed (e.g. the sheet material, like e.g. a metal plate) is placed on the support table (e.g., X and Y position). If the material is small and only covers a part of the support table, it is sufficient to instruct the optical sensor system to orientate or align itself towards the position on the support table, where the material is placed and to capture the complete material in one single shot.

The covered area, generally, depends on the amount of cameras used in parallel and on the size of the support table. If one camera is used, the camera is adapted to capture or cover with one shot an area of more than 100cm2, for example about 1,5m2 which may be approximately 30% of the area of the support table, which typically extends 1,5m wide and 3m long. In case the optical sensor system comprises e.g., 5 cameras in a row the field of view of the optical sensor system is >3000cm2 and thus approx. 6% of the 3x1.5m table. If more cameras are used, e.g. 5, the cameras may be arranged closer to the support table and each camera covers then a smaller area (maybe 0.3 x 0.2m).

All images of the cameras may be stitched to provide one image of the whole material to be cut.

The resolution of the images captured by the cameras may be 3 to 10 pixel/mm and in particular around 5 pixel /mm. The image pixel size of the optical sensor element of the camera may be larger than 0.1 mm. Preferably, the camera is a low-resolution camera and/or not a high resolution camera. The advantage of having a low-resolution camera is cost saving and a fast image acquisition over the whole support table. With a low-resolution camera, it is possible to cover multiple cm2 per image leading to a fast image acquisition for the full support table.

Generally, in order to scan the whole support table (in short: table) (in a certain time limit) the optical sensor system, e.g. the camera(s), must be moved in relation to, in particular over, the table with speed and/or the vice versa, namely the support table must be moved in relation to the optical sensor system, in particular underneath the optical sensor system.

The camera may be selected or configured, inter alia with respect to field of view and resolution, to provide a scanning speed for covering the whole support table with approximately 0.1 m2/s or even higher. I.e. it only takes between 10 and 30 seconds to scan the whole support table.

The (trained) neural network may comprise more than one neural network, in particular a DNN, and more particular CNN.

The classification algorithm (only) processes data in the image domain and/or not in the spatial frequency domain.

The inference phase (using the detection method) is executed prior to material processing, in particular cutting (pre-process). The classification algorithm and the inference phase will be executed before the cutting, in order to have the chance to apply any possible countermeasures, in particular, pre-process countermeasures as for example a cleaning process and/or an adaption of the cutting plan. In particular, the inference phase may be applied over the whole material to be processed (sheet metal) before cutting on that sheet starts. Thus, inference phase may be applied and thus a classification result of the detection method may be provided not locally for parts of the material to be processed in an iterative or step-by-step mode, but the classification result may be provided for the whole material to be processed at once, i.e. for the whole sheet prior to cutting.

The solution described herein enables the processing system to react appropriately or to remove the anomaly in case there are deviations from the norm and/or expected state of the material.

The method may involve several steps, starting with the acquisition of image data of the material to be processed. This data is captured via an input interface connected to an optical sensor system. The optical sensor system can be any device or system capable of capturing image data, such as a camera, a lidar sensor, a infrared sensor, a spectrometer and/or an optical scanner. The image data can include various types of information about the material, such as its color, texture, shape, size, and other physical characteristics. Once the image data has been received, it is processed using a classification algorithm that is embedded in a trained neural network. Neural networks are a type of machine learning model that are designed to automatically learn and improve from experience without being explicitly programmed. They are capable of learning complex patterns and making predictions based on input data. In this case, the neural network has been trained to recognize anomalies on the material to be processed - in particular on the surface of the material facing the optical sensor system - based on the image data. The classification algorithm embedded in the neural network processes the image data of the actually loaded material, and classifies it into different categories based on the presence or absence of anomalies. Anomalies can include any irregularities or deviations from the norm that may affect the quality of the material or the laser processing operation. These can include defects in the material, such as cracks, scratches, rust, tape or impurities, as well as issues with the laser loading system and/or support table itself, such as misalignment or malfunction. After the image data has been processed and classified by the neural network, a classification result is provided on an output interface. The output interface can be any device or system capable of displaying or transmitting the classification result, such as a computer monitor, a printer, or a network connection. The output interface may thus be adapted to exchange data with a countermeasure device for triggering or executing countermeasure algorithm. The classification result can include various types of information, such as the type and location of any detected anomalies, as well as optionally recommendations or initiation requests for corrective actions (countermeasures). This method provides a reliable and efficient way to detect anomalies on the material to be processed by a laser processing machine. By using a trained neural network, it can automatically learn and adapt to new types of anomalies, making it more accurate and versatile than traditional detection methods. Furthermore, by providing the classification result on an output interface, it allows for easy interpretation and use of the results, facilitating quick and effective (manual and/or automatic) decision-making.

Alternatively or in addition, the optical sensor system is mounted in a manner that allows it to move relative to the material to be processed. This mobility can be achieved through various means, such as mounting the sensor on a movable arm or a track system. The ability to move the sensor system relative to the material provides several advantages. For instance, it allows the sensor to capture image data from different angles and positions, which can provide a more comprehensive view of the material. This can be particularly useful for detecting anomalies that may not be visible from a single, fixed perspective. Furthermore, the ability to move the sensor can also enable the system to adjust its position based on the specific requirements of the material or the processing task, enhancing the flexibility and adaptability of the detection method.

Alternatively or in addition, the optical sensor system is mounted outside a laser processing cell. This outside positioning has the main advantage that while a sheet is cut inside the cutting cell, already the next sheet, waiting outside can be analyzed with respect to anomalies (and treated if needed). This saves a lot of time. Further, this can provide a broader field of view and allow for easier access and maintenance of the sensor system. It also reduces the risk of damage to the sensor system from heat, debris, or other potential hazards within the laser processing cell.

Alternatively or in addition, the optical sensor system is mounted on a mounting device. This mounting device can be arranged on various types of equipment, such as a robot, a cleaning system, or a loading system. In particular, the mounting device can be arranged on a movable robot, a movable cleaning system, or a movable loading system. This arrangement allows the sensor system to move along with the equipment, enabling it to capture image data from different positions and angles as the equipment performs its tasks. For instance, when the sensor system is mounted on a robot, it can move along with the robot as it manipulates the material, allowing it to continuously monitor the material from close range. When the sensor system is mounted on a cleaning system, it can inspect the material before and after cleaning, helping to ensure the effectiveness of the cleaning process. When the sensor system is mounted on a loading system, it can check the material as it is being loaded or unloaded, helping to prevent damage or misplacement of the material. These arrangements enhance the versatility and effectiveness of the detection method, making it suitable for a wide range of laser processing applications.

Alternatively or in addition, the optical sensor system is mounted above a support table in such a way that one image or a maximum number of k images captured with the optical sensor system, e.g. 3 < k < 300, covers the complete support table in one single scan.

Scan, herein, refers to the optical detection, screening, or observation of the material to be processed (in short: material) by means of the optical sensor system to capture an image representation of the material. According to a preferred embodiment, one single scan is applied. A scan may make use of one single camera or more than one camera working in parallel. If only one camera is used, then, a scan refers to a detection or shot of the camera. If more cameras are used, a scan refers to one shot of multiple cameras in one time instance, wherein the multiple images of the multiple cameras are stitched.

Alternatively, it is possible to apply more than one scan. Thus, the scanning may be repeated to provide a more reliable result. The image data acquired in the multiple scans may be averaged.

Generally, the parameter k, defining the maximum number of images, which are necessary to cover or capture the whole support table, depends on the setting of the optical sensor system in relation to the support table, in particular to the amount of cameras used for or in the optical sensor system in parallel. If only 1 camera is used, there is no need for stitching the captured images. Typically, 3 images are needed. If more than 1 camera is used, e.g., 5 (five) in a row, the images of all the cameras are stitched by applying a stitching algorithm to provide a stitched image, which is processed. As this stitched image may cover more than 5% of the whole support table, at least 20 of such images are needed to cover a whole 1.5x3m table. In an example where the optical sensor system consists of 5 cameras, there are 5 times more single images (from a single camera) than from the optical sensor system, i.e. 5x20=100 images are needed as a minimum to cover the whole table. For providing an improved image processing quality, and for covering a 1.5x3m table, a notable overlap between the images is needed.

Thus, for example, about 60 (stitched) images from the optical sensor system and about 300 individual images from the cameras may be used.

However, it is to be noted, that although the table size of 1.5x3m is the most popular table size, the invention may as well be applied to other table sizes, e.g. larger tables (2x4m, 2x10m,...).

This arrangement allows for a comprehensive view of the entire material to be processed, which is placed on the support table, in a single scan and even in a single image or a limited number of images. This can be particularly beneficial in terms of efficiency and accuracy. By capturing the entire support table in one scan, in particular with one image or a limited number of images, the system can quickly and efficiently assess the entire material without the need for multiple scans or images. This can significantly reduce the time required for the detection process, leading to increased productivity. Furthermore, by providing a comprehensive view of the entire material, this arrangement can help ensure that no areas of the material are missed or overlooked during the detection process. This can enhance the accuracy and reliability of the anomaly detection, helping to ensure that all potential anomalies are identified. The specific maximum number of images required to cover the complete support table can vary depending on factors such as the size of the support table, the size of the material to be laser processed, the field-of-view of the optical sensor system, and the specific requirements of the detection process. The specific maximum number of required images can be in the range of 1 - 500, e.g. in a low range: 3.

Alternatively or in addition, the classification result provided by the method includes a set of parameters. The parameters may comprise a classification type, a severity (severeness) score, information about the size and/or position of the detected anomalies, and/or a removability score. This classification type can provide information about the nature of any detected anomalies, such as whether they are cracks, scratches, tapes, rust, moss, dirt, impurities, or other types of defects, like oily and/or wet surface. This information can be useful for determining the appropriate corrective action to take, if any. In addition to the classification type, the classification result may optionally include a severity (severeness) score. This score can provide a quantitative measure of the severity or seriousness of the detected anomalies. For instance, a higher severity score may indicate a more serious or problematic anomaly that requires immediate attention, while a lower severity score may indicate a less serious anomaly that may not require immediate action. The classification result may alternatively or in addition include information about the size of the detected anomalies. This can provide a measure of the physical dimensions of the anomalies, such as their length, width, depth, or volume. This information can be useful for assessing the potential impact of the anomalies on the quality of the material or the laser processing operation. The classification result may alternatively or in addition include information about the position of the detected anomalies. This can provide a measure of the location of the anomalies on the material, such as their coordinates or their distance from a reference point. This information can be useful for locating the anomalies for further inspection or corrective action. Finally, the classification result may alternatively or in addition include a removability score. This score can provide a measure of how easily the detected anomalies can be removed or corrected. For instance, a higher removability score may indicate an anomaly that can be easily removed or corrected, while a lower removability score may indicate an anomaly that is more difficult to remove or correct. This information can be useful for planning and prioritizing corrective actions.

Alternatively or in addition, the classification algorithm is configured to provide a classification result with at least two different classes: with anomaly and no anomaly. This binary classification system allows for a straightforward and clear determination of whether or not an anomaly is present on the material to be processed. The classification algorithm, embedded in the trained neural network, processes the image data and classifies it into one of these two categories based on the presence or absence of anomalies. Anomalies can include any irregularities or deviations from the norm that may affect the quality of the material or the laser processing operation. These can include defects in the material, such as cracks, rust, or impurities, as well as issues with the loading system or the support table itself, such as misalignment or malfunction. By providing a binary classification result, the method simplifies the process of interpreting the results and deciding on the appropriate course of action. If the classification result indicates "with anomaly", this signals that there is a problem that needs to be addressed, such as repairing a defect at or on the material or adjusting the settings of the loading system. If the classification result indicates "no anomaly", this signals that the material and the loading system are in good condition and the process can proceed as planned. This clear and straightforward classification system can help to improve the efficiency and effectiveness of the laser processing operation.

Alternatively or in addition, the classification algorithm is configured to provide a classification result with more than two classes. This multi-class classification system allows for a more detailed and nuanced determination of the type of anomaly present on the material to be processed. The classes can comprise a tape class, a marker class, a rust class, a scratch class, a dirt class, an oil class, and/or a water class. Each of these classes represents a different type of anomaly that can be detected on the material. For instance, the tape class represents anomalies related to the presence of tape and/or adhesive and/or residues, in particular packaging residues, on the material, the marker class represents anomalies related to the presence of marker or ink, the rust class represents anomalies related to the presence of rust, and so on. The classification algorithm, embedded in the trained neural network, processes the image data and classifies it into one of these classes based on the characteristics of the detected anomalies. This multi-class classification system provides a more detailed and specific understanding of the anomalies present on the material, which can be useful for determining the appropriate corrective action to take. For example, if the classification result indicates the rust class, this signals that the material may need to be cleaned or treated to remove the rust before proceeding with the laser processing operation. If the classification result indicates the tape class, this signals that the tape may need to be removed from the material. This detailed classification system can help to improve the efficiency and effectiveness of the laser processing operation.

Alternatively or in addition, the classification result is used to control an anomaly countermeasure algorithm. This algorithm is designed to initiate appropriate action to remove the anomaly. The classification result may in particular be used to directly control the anomaly countermeasure algorithm or the countermeasure device respectively, in particular without further manual interaction. In particular, the parameters of the classification result may be used to initiate appropriate countermeasure configurations and/or countermeasure steps.

The anomaly countermeasure algorithm may be configured to control a countermeasure device for executing the - optionally parameterized - countermeasures. The parameters may for instance comprise a time indication, "when executing the cleaning", a location indication for defining the area for the cleaning, type of cleaning, and/or time interval for cleaning. The countermeasure device may be the processing laser (e.g., cutting laser or, welding laser), which is used with different parameters (e.g., less power) for cleaning compared to usual processing (e.g., cutting) and/or a cleaning system (or robot), e.g., for de-rusting. In particular, a laser may be used for cleaning metal surfaces and/or systems with brushes may be used, which in particular work for loose tapes and flaking rust and/or systems which apply liquid chemicals, in particular before mechanically brushing. This process is known as laser cleaning or laser ablation and involves using a high-energy laser beam to remove contaminants, rust, paint, or coatings from a metal surface without damaging the underlying material. Alternatively, instead of cleaning an anomaly with an extra-cleaning system/laser, it is also possible with the available processing laser, e.g. the kW-cutting laser. But for this it is advantageous to know where anomalies are that a cleaning process can be executed on or along the planned processing contour as e.g. cutting contour.

The anomaly countermeasure algorithm may be based on the classification type and/or severity score and/or anomaly size and/or anomaly position and/or removability score of the detected anomalies. The anomaly countermeasure algorithm can include a variety of different actions or procedures designed to address the detected anomalies. For example, if the classification result indicates the presence of a scratch on the material, the countermeasure algorithm might initiate a process to repair or smooth out the scratch, if possible; otherwise the cutting plan may be adapted. If the classification result indicates the presence of rust, the countermeasure algorithm might initiate a process to clean or treat the rusted area. The use of an anomaly countermeasure algorithm allows for automated dedicated and efficient response to detected anomalies. By automatically initiating appropriate countermeasures based on the classification result, the method can help to quickly and effectively address any issues with the material or the laser processing operation, improving the overall efficiency and quality of the process.

Alternatively or in addition, the anomaly countermeasure algorithm may comprise one or more of the following functions: an anomaly removal function, a machine stop function, a material exchange function, an adaptation of the processing plan, and/or an adaptation of processing parameters of the laser processing machine. The anomaly removal function is designed to initiate a process to remove or correct the detected anomalies. This could involve, for example, cleaning the material, repairing a defect, or adjusting the settings of the laser processing machine. The machine stop function is designed to halt the operation of the laser processing machine in response to certain types of anomalies. This function may also include providing information to the operator about the detected anomalies and the reason for the stoppage. This can help to prevent further damage or issues and allow the operator to take appropriate corrective action. The material exchange function is designed to trigger the exchange of the material to be processed. This could be particularly useful in cases where the detected anomalies are severe or widespread, making it more efficient to replace the material rather than attempting to correct the anomalies. The exchange of the material could be carried out automatically by the machine, further enhancing the efficiency of the process. The adaptation of the processing plan is designed to adjust the planned processing steps or sequence in response to the detected anomalies. This could involve, for example, changing the order of the processing steps or in particular the cutting plan, adding additional steps, or skipping certain steps. The adaptation of processing parameters is designed to adjust the operating parameters of the laser processing machine in response to the detected anomalies. This could involve, for example, changing the power or focus of the laser, adjusting the speed or direction of the machine, or modifying other settings or controls. These functions provide a comprehensive and flexible set of tools for responding to detected anomalies, helping to ensure the quality and efficiency of the laser processing operation.

Alternatively or in addition, the control of the anomaly countermeasure algorithm is configured to consider a user selection input. This has the advantage that the user may input a decision signal which guides the set of actions to take and optionally their setting, like when and/or how to take the action. Further, this enables user verification of the automatically and algorithmically generated countermeasures.

Alternatively or in addition, the received image data are pre-processed before being input into the classification algorithm. This pre-processing can involve various techniques designed to enhance the quality of the image data and improve the accuracy of the anomaly detection. One such pre-processing technique is the application of an edge detection algorithm. Edge detection is a technique used in image processing to identify the boundaries or edges of objects within an image. By highlighting these edges, the algorithm can make it easier to identify and analyze the features of the material, including any anomalies. The edge detection algorithm can be a classical image-based edge detection algorithm, such as the Sobel filter, Prewitt operator, or Canny algorithms. These algorithms work by analyzing the intensity gradients or changes in the image, which often correspond to the edges of objects. Alternatively, or in addition, the edge detection algorithm can be a deep learning algorithm. Deep learning is a type of machine learning that uses neural networks with many layers (hence the term "deep") to learn complex patterns in large amounts of data. A deep learning-based edge detection algorithm can be trained to recognize the edges of objects in the image data based on a large set of training images. This can potentially provide more accurate and robust edge detection, especially for complex or irregular shapes. By pre-processing the image data with an edge detection algorithm, the method can enhance the visibility of the anomalies and improve the accuracy of the classification algorithm, leading to more reliable and effective anomaly detection.

Alternatively or in addition, the method includes the use of a gradient-weighted class activation mapping technique, also known as Grad-CAM, for determining regions in an image that have been emphasized by the method, particularly by the classification algorithm, to contribute most to the anomaly detection. Grad-CAM is a technique used in machine learning to visualize the regions of an input image that are important for making predictions or classifications. It works by using the gradients of the target concept flowing into the final convolutional layer of a convolutional neural network to produce a coarse localization map highlighting the important regions in the image. In the context of this method, Grad-CAM can be used to identify the regions of the image that contribute most to the detection of anomalies. These regions can then be considered as the position and size of the anomaly. This can provide a visual representation of the detected anomalies, making it easier to understand and interpret the results of the anomaly detection. It can also provide valuable information for further analysis or corrective action, such as determining the exact location and extent of the anomaly on the material.

The present invention also encompasses a processing device to be used for a laser processing machine. This device includes a processor, an input interface, and an output interface. The processor is adapted to execute the detection method as described in the previous claims. This involves receiving image data of the material to be processed, processing this data using a classification algorithm embedded in a trained neural network, and providing a classification result. The input interface provides a data connection between an optical sensor system and the processor. This allows the image data captured by the optical sensor system to be transmitted to the processor for analysis. The input interface can support various types of data connections, such as wired or wireless connections, and can be compatible with various data formats and protocols. The output interface is configured to provide the classification result determined by the processor. This can be done in various ways, such as displaying the result on a screen, printing it out, or transmitting it to another device or system in particular for controlling subsequent derives and/or machines (e.g. a cleaning system, a laser cutting system...). The output interface can support various types of data connections, formats, and protocols, and can be compatible with various types of display or output devices. This processing device provides a comprehensive solution for detecting anomalies on the material to be processed by a laser processing machine. By integrating the detection method into a single device, it simplifies the process and makes it more efficient and convenient to use.

The present invention also encompasses a training method for training the neural network to be used in the detection method as described above. This training method involves the use of synthetically and automatically generated training data, which includes a set of labelled images. Alternatively or in addition, the training method may begin with the optional step of receiving setting data for setting the image data generation in the next step. This setting data could include, for example, a CAD file with environmental data of the laser processing machine. This data can provide information about the physical layout and characteristics of the machine and its environment, which can be used to generate realistic and accurate synthetic images for the training data. The training method then involves applying a training-data generation algorithm for generating or rendering a set of images for each class of a set of classes. Each class represents a different type of anomaly that can be detected by the method, such as cracks, scratches, rust, moss, and/or residues or impurities, or other types of defects. The training-data generation algorithm may use the setting data and other parameters to generate synthetic images that accurately represent these different types of anomalies. The result of the applied training-data generation algorithm is a set of synthetically generated training data, which includes the rendered images with respective labels. Each image is labelled with the class of anomaly it represents, providing a ground truth label that the neural network can learn from. This training method provides a reliable and efficient way to train the neural network for the detection method. By using synthetically generated training data, it can generate a large and diverse set of training examples without the need for manual labelling or data collection. This can significantly reduce the time and effort required for training, while also improving the accuracy and robustness of the trained neural network.

Alternatively or in addition, the training method, may comprise training a pretrained image classifier on a labeled dataset, and using it to predict labels for new images, acquired by means of the optical sensor system (and thus images, coming from a real-life scenario, also named as real-life scenario data). Thereinafter, fine tuning may be applied. Fine-tuning is a step of the training method required to make sure that with the method it is possible to continue predicting well when met with data from a real-life scenario. The pretrained image classifier is to be trained on those synthetically generated images first. This is why then fine tuning may be used afterwards to make sure that the model will also be able to predict on images taken by the optical sensor system (in the real-life scenario).

The training-data generation algorithm may be based on a generative model, in particular a controllable generative model. The training-data generation algorithm may make use of a Generative Adversarial Network (GAN), a Variational Autoencoder (VAE), a transformer network, and/or a diffusion model, like e.g., stable diffusion.

Alternatively or in addition, the training method, may employ a transfer learning algorithm to adapt the model trained in a source domain to a target domain with image data acquired from the optical sensor system. Transfer learning is a machine learning technique where a pre-trained model, developed for a certain task, is reused as the starting point for a model on a second task. It is a popular approach in deep learning where pre-trained models are used as the starting point on computer vision and natural language processing tasks given the vast compute and time resources required to develop neural network models on these problems. In the context of this method, the source domain could be the domain in which the initial model was trained, which could be based on a variety of image data, including synthetically generated images. The target domain, on the other hand, would be the specific domain of the images acquired from the optical sensor system of the laser processing machine. By using transfer learning, the method can leverage the knowledge gained from the source domain to improve the performance of the model in the target domain. This can be particularly beneficial when the amount of available training data in the target domain is limited. Furthermore, transfer learning can significantly reduce the computational resources and time required to train the model, making the training process more efficient.

The present invention also encompasses a laser processing system. This system includes a laser processing machine, like e.g. a flatbed laser cutting machine and a processing device as described above. The laser processing machine is designed to perform various types of laser processing tasks on a material, such as cutting, engraving, marking, or welding. The processing device is configured to execute the detection method for identifying anomalies on the material to be processed by the laser processing machine. In addition to the laser processing machine and the processing device, the laser processing system may optionally include an optical sensor system. This sensor system is used to capture image data of the material to be processed, which is then transmitted to the processing device for analysis. The optical sensor system can include various types of sensors, such as cameras or scanners, and can be configured to capture different types of image data, such as color, texture, shape, size, and other physical characteristics of the material. This laser processing system provides a comprehensive solution for laser processing tasks. By integrating the laser processing machine, the processing device, and the optional optical sensor system into a single system, it simplifies the process and makes it more efficient and convenient to use. Furthermore, by using the detection method to identify and address anomalies on the material, the system can help to improve the quality and efficiency of the laser processing operation.

In another aspect the invention relates to a computer program product comprising a computer program, the computer program being loadable into a memory unit of a computing unit, including program code sections to make the computing unit execute the method for detecting anomalies or for training the neural network according to an aspect of the invention, when the computer program is executed in said computing unit.

In another aspect the invention relates to a computer-readable medium, on which program code sections of a computer program are stored or saved, said program code sections being loadable into and/or executable in a computing unit to make the computing unit execute the method for detecting anomalies or for training the neural network according to an aspect of the invention, when the program code sections are executed in the computing unit.

### Brief description of the figures

- Fig. 1a: A sample image of a steel plate with rust;
- Fig. 1b: a sample image of a stainless steel plate with tapes and colored marks;
- Fig. 1c: a sample image of mild steel with oily surface;
- Fig. 2: a schematic representation of a system setup according to a possible embodiment of the present invention;
- Fig. 3: another schematic representation of an alternative system setup;
- Fig. 4: another schematic representation of an alternative system setup with a movable optical sensor system;
- Fig. 5: a flow chart of a detection method according to a simple embodiment without a cleaning or removal system;
- Fig. 6: a flow chart of a detection method according to an advanced embodiment with application of a countermeasure algorithm and respective devices;
- Fig. 7: a flow chart of a detection method according to an alternative simple embodiment without a cleaning or removal system;
- Fig. 8: a flow chart of a detection method according to an alternative advanced embodiment with application of a countermeasure algorithm and respective devices;
- Fig. 9: schematic representation of a possible cleaning device;
- Fig. 10: a flow chart of a detection method according to an embodiment of the present invention;
- Fig. 11: a flow chart of a training method according to an embodiment of the present invention; and
- Fig. 12: a schematic block diagram of a laser processing system with a processing device according to an embodiment of the invention.

### Detailed description of the drawings

The identification of anomalies and/or characteristics on the surface of a material M to be laser processed, in particular of sheet metal to be cut is disclosed. It is done by means of an optical sensor system, in particular a camera 1, looking from above and with the use of artificial intelligence. The identification is done pre-process with a macroscopic view on the support table 2, e.g., shuttle table. Main addressed anomalies comprise tapes, colors, markers, scratches, rust, dirt, moss, oil, and/or water. Artificial intelligence (in particular deep neural networks) is used to determine, identify, and/or localize the anomalies. Methods for the inference and for the training phase and, deployment approaches are described. Ideally, the camera can be moved above the shuttle table, typically by means of a loading robot or the cutting table is moved below the camera with a table exchange device. Finally, follow-up actions (countermeasures) in case of the presence of sheet anomalies may be initiated automatically.

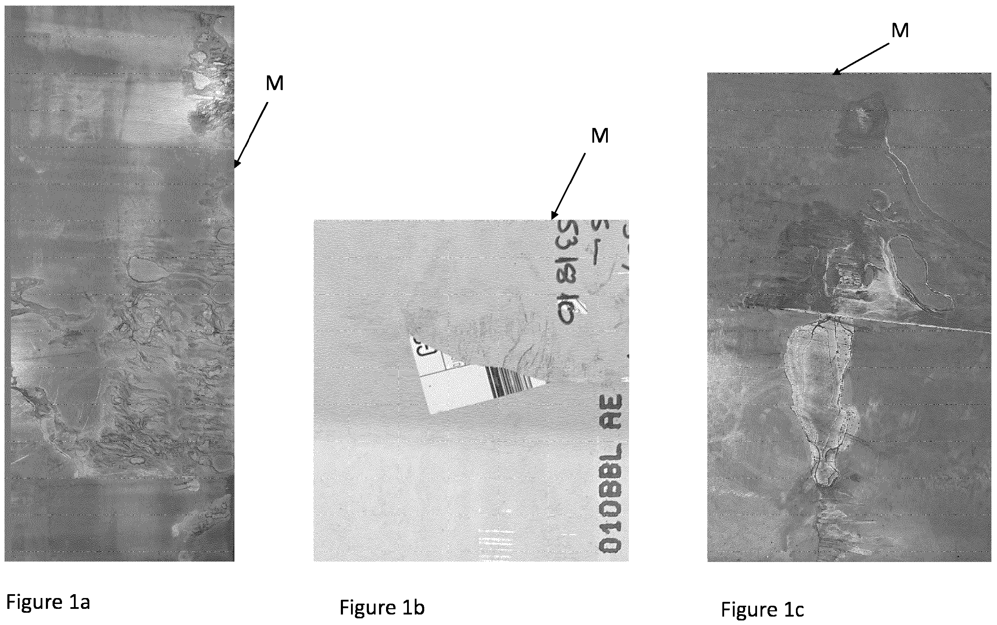

Sheets and plates of metal to be cut with different undesired anomalies are not seldom. As plates are often stored outside, rust may be present. The same is causing dirty or even mossy surfaces. Further, some sheet surfaces have colored marks, colors in general and/or tapes. Often, surfaces also have water and/or oil or are scratched. A few examples of the mentioned defects are shown in **Fig. 1a-1c****.**

All these anomalies affect the laser cutting capabilities and performance. Knowing the type and the location of the anomaly enables to take appropriate countermeasures as to remove it, to adapt the cutting plan or to adapt the cutting parameters.

For instance, this means
- Rust on a surface can cause a rough cut or a cut with a large burr or can even hinder a cut-through.

Possible countermeasures are
o to reduce the cutting speed or
o to adapt the cutting plan that (particularly critical) contour cuts are not done over the rusty area or
o in case a surface-cleaning system 7, in this case typically a de-rusting system (= Rust removal system) is available to apply the de-rusting over the respective area. A de-rusting system is preferably a de-rusting laser or surface treatment laser.

- Tape on a surface typically hinders a proper cut-through, i.e. causes a loss-of cut.

Possible countermeasures are
o to burn away or remove the tape along the cut contour. This may be executed by controlling a countermeasure device by means of the countermeasure algorithm cou. The countermeasure device may be a laser, either the cut laser (used for cutting) with the cutting laser beam (with low laser power) and/or with a surface cleaning system as e.g. a surface treatment laser.
∘ Alternatively, the cutting plan can be adapted and the pieces to cut can be rearranged that cuts do not go over the tape.

- Dirt and moss can be best addressed by adapting the cutting plan and to avoid cutting where dirt/moss is present. Alternatively, a removal can be tried with a surface cleaning system if available.
- Also, colors/color marks do affect the cutting performance. Depending on the color intensity, one of the possible countermeasures are best to be applied. If the color intensity is not strong, it is enough to adapt only the cutting parameters to less speed and more robustness. In the other case, the color can be removed, or the cutting plan must be adapted.
- In case of oily or wet surfaces typically a reduced cutting speed is sufficient as countermeasure.
- Scratches typically cannot be removed or cleaned. In that case the cutting plan can be adapted or alternatively the cutting parameters have to be made more robust (on the expense of cutting speed)

The proposed actions, listed above, are proposed default settings. However, the customer can change and choose himself the taken countermeasures if he prefers other measures. For this reason, a user interface is provided in order to input and process user signals for controlling a countermeasure algorithm cou.

The recognition of the above listed anomalies is a prerequisite to hinder a rough cut or a cut with large burr or even a loss-of-cut.

Until today, with the blind loading systems and loading procedure, these undesired cutting behaviors could not be prevented well before cutting which is however needed to take countermeasures as cutting plan adaption or applying cleaning systems 7.

In order to avoid these undesired cutting, which even lead often to downtimes of the system, a low-cost 2d-camera is suggested to be placed above the table which detects and localizes the mentioned anomalies by means of artificial intelligence. It is also possible to place more than only one camera over the cutting table.

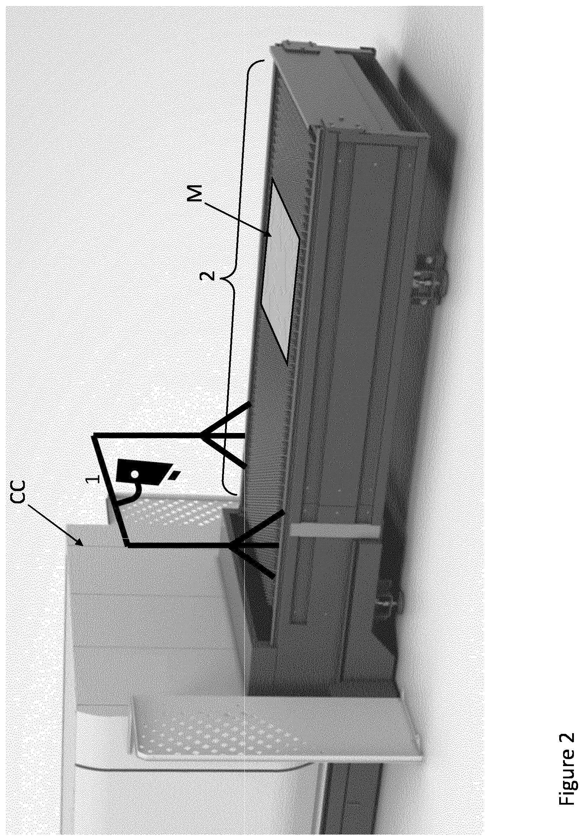

**Figure 2** shows a first possible embodiment with a camera 1, used as optical sensor system, which is above the cutting table 2 with a loaded metal sheet M. A typical cutting machine L usually has two cutting tables, one is inside the cutting cell CC and the other is outside, with the cutting tables alternating inside and outside. The one that is outside of the cutting cell CC is intended to be loaded with metal sheets M. Ideally the camera 1 is placed outside the cutting cell CC, monitoring the loaded sheet to be cut, in particular before it is cut.

The required resolution for the camera setting (including distance from the camera to the table) is moderate but must be good enough that the anomalies can be well seen. Thus, a resolution at the object plane (down at the sheet metal) of a few millimeters (approx. 1-4 mm) should be good enough. In an exemplary embodiment we used the Sony alpha a6300 camera with effective resolution of 24MP (6000x4000) at a distance of 76 cm from the cutting table while using a lens with a focal length of 16mm. Therewith 3 photos are exemplarily needed to monitor the complete 1.5 x 3m cutting table. In alternative embodiments with slightly other settings, 1 to 400 camera shots are required to cover the complete support table.

The laboratory camera support, shown in Fig. 2 is only an example. A loading robot/system that can move the camera 1 across the table and simply pick up the camera 1 as a tool if desired or have it permanently mounted would be particularly suitable.

However, if there is not a loading system available it is also conceivable that the camera 1 is mounted stationary above the table and instead of the camera 1 moving over the table, that the table moves under the stationary camera. In that case, the camera can be mounted inside or outside of the cutting cell.

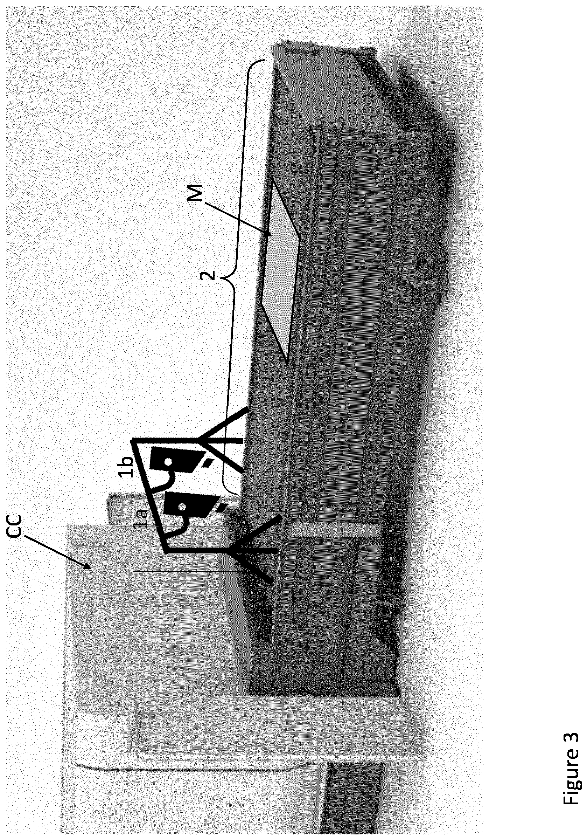

**Figure 3** shows such a system, where cameras 1a, 1b are conceivable to be stationary and the cutting table 2 is moving. Furthermore, Fig. 3 shows two cameras 1a and 1b, which are placed above the (support/cutting) table 2. There are several advantages to use two or more cameras instead of only one. First, a more compact setup in height is achievable as a smaller field of view on the table must be covered by one camera. Secondly, the needed number of pixels per camera is reduced as more cameras are used. As the volume of available pixels can be an over-proportional cost driver in cameras, using several lower-cost cameras can be more economic than using one high-priced camera.

In case of Fig 2 and 3 the table moves below the fixed sensor system with a speed of about 0.3m/s, at least >0.1m/s.

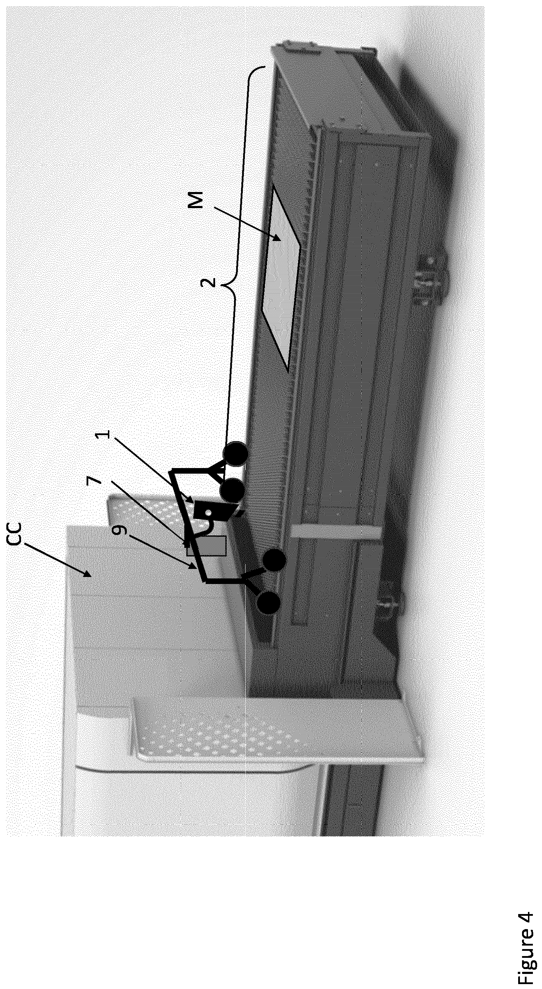

Finally, **Fig. 4** shows a system where the camera(s) can be moved over the table 2. Figure 4 includes also a surface cleaning system 7, realized in this example with a de-rusting/cleaning laser system. The cleaning system 7 can optionally move along a bar 9 to clean the sheet where necessary (cleaning positions or areas are provided by the countermeasure algorithm). The surface cleaning system 7 can clean these areas equally well. A common procedure will be to first monitor first the sheet M to cut and to detect possible anomalies. In case there are some which can be removed with the cleaner, the cleaning is then done in the subsequent step.

In case of Fig.4 the cameras are moved over the table with a speed of about 0.3 m/s, at least >0.1 m/s.

In the following the many notable and relevant software aspects are discussed. First the identification- and detection algorithms are explained. Secondly, as in these cases the needed data acquisition is particularly challenging and need creative methods, a further section is devoted to this task.

### Identification- & Localization procedure

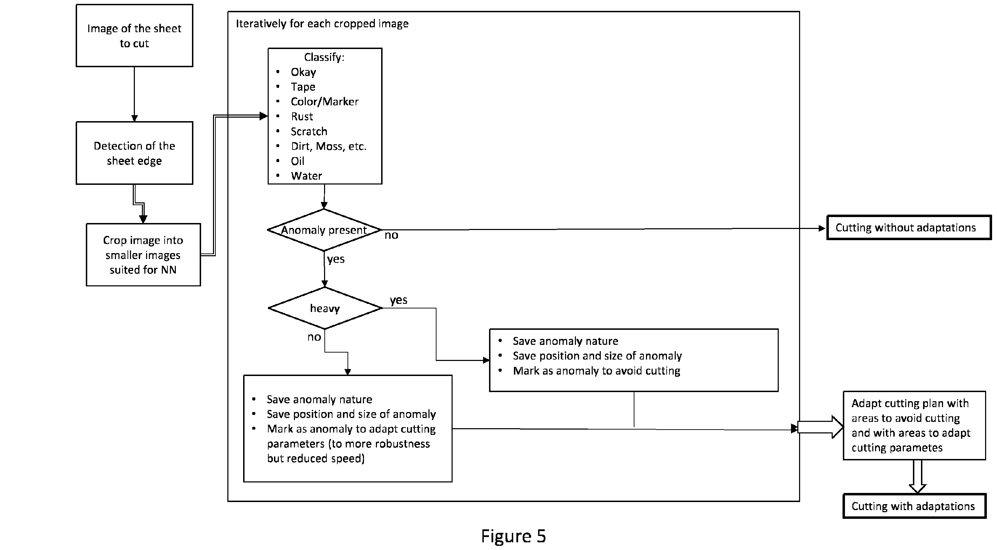

To identify and localize the different anomalies based on the image from the camera described above, the following algorithmic procedure is foreseen and visualized in **Figure 5****.**

In this embodiment, no cleaning or removal system is provided. However, the countermeasure algorithm may still be applied, by e.g., adapting the cutting plan or the cutting parameters.

First, an edge (or line) detection algorithm will be used to detect the edges and location of the sheet M to cut.

In a second step, the full sheet's image is cropped to smaller images suited to be processed by a neural network, particularly a deep neural network. Each of those cropped images is then individually processed and classified as "Okay", "Tape", "Color/Marker", "Rust", "Scratch", "Dirt/Moss", "Oil", or "Water" using a classification algorithm cla.

Note that alternatively, a 2-step algorithm could be applied, starting with the "okay" detection where only the class "okay" is distinguished from all the other classes, i.e. the "not-okay class" (trained only with "okay"-images), followed by the anomaly detection where the different anomalies are classified (trained only with the different anomalies). Further details will follow below in the text.

The outcome of this classifier is the type of anomaly and optionally the severeness of the anomaly. The severeness can be explicitly trained in severeness-classes, like e.g., "heavy" and "little". Alternatively, the identification probability (p) can be used as an indication of the severeness. E.g. p>70% means "heavy" and from 50%-70% means "little".

Alternatively, a One-Class Anomaly Detection Algorithm may be applied. A one-class anomaly detection algorithm is a subset of machine learning methods designed specifically to identify outliers or anomalies within a dataset. These algorithms are trained on a dataset that predominantly contains "normal" examples (okay image) and aim to detect whether a new data point deviates significantly from this norm. For example, a One-Class support vector machine, SVM, isolation forest-based methods, Autoencoders or principal component analysis, PCA may be used.

As can be seen in **Fig. 5****,** depending on the severeness, e.g. three different possible actions are initiated, in particular by the provided classification result cr, for the sheet area of the cropped image under consideration. If no anomaly is present, cutting without adaptations is possible over this area. Second, if a week anomaly is detected, only the cutting parameters can be adapted. And third, if a heavy anomaly is detected, the cutting plan has to be adapted so that the area with the anomaly will not be cut. When all the cropped images are processed, and it is known how to process the respective sheet areas, the cutting plan can be adapted and/or the cutting parameters can be adapted where necessary.

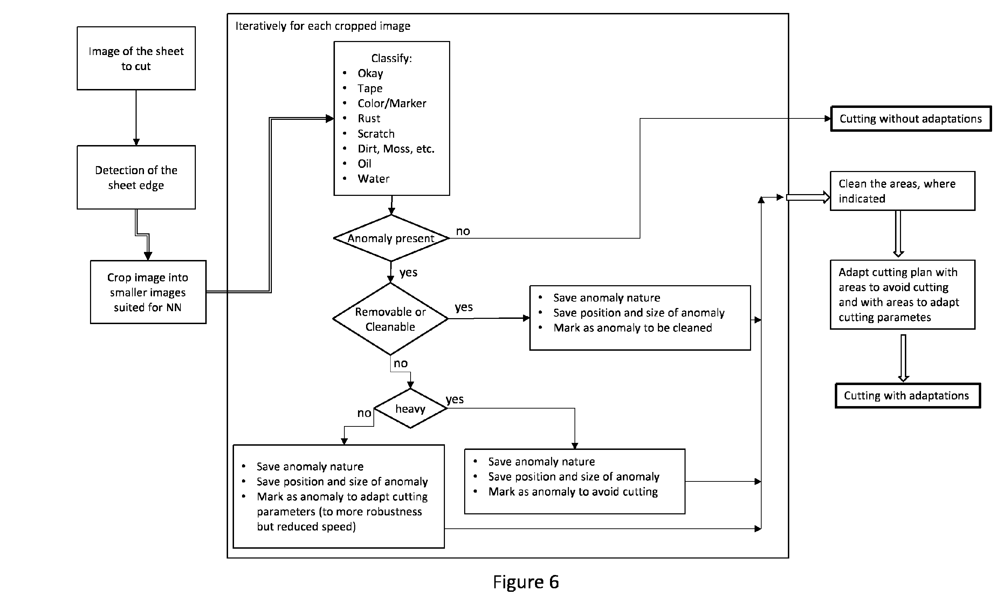

In case that there is a cleaning system 7 available, the procedure is slightly adapted. The adapted procedure is shown in Figure 6. In this example, in the classification step the outcome, i.e. the classification result cr, will be the kind of the anomaly, the severeness of the anomaly and if the anomaly can be cleaned or removed. Rust and tape can be well removed. Scratches usually cannot be removed or cleaned. Oil and water do not need to be removed. Color/Marker as well as Dirt/Moss is difficult to remove but it can be tried. It is possible by means of user interface input, to let the customer decide if these anomalies shall be tried to be removed or not.

Depending on the outcome of the classifier (i.e. classification algorithm), for instance four different possible actions may be triggered for the area of the cropped image under consideration, see Fig. 6. If no anomaly is present, cutting without adaptations is possible over this area. Second, if a cleanable/removable anomaly is present, this area can be cleaned. Third, if a uncleanable anomaly is present but the anomaly is week, only the cutting parameters can be adapted. And fourth, if an uncleanable anomaly is present but it is a heavy anomaly, the cutting plan has to be adapted that the area with this anomaly will not be cut. When all the cropped images are processed and it is known how to treat the respective sheet areas, the respective areas can be cleaned, cutting plan can be adapted and/or the cutting parameters can be adapted where necessary.

### Line/edge detection (classical / deep segmentation)

To detect the sheet edges a classical edge detection algorithm is used. First the image is transformed to grayscale, then the brightness of the image is optionally adjusted by an appropriate procedure (for example histogram equalization). On the resulting grayscale image the edges are found by calculating the gradient of the grayscale values and segmenting the resulting image using a simple thresholding. Optionally a gaussian filter can be applied on the initial image to smooth it and reduce the noise in the final edge result. This exemplary, edge detection approach is known as Canny edge detector but there are various others that can be applied, like Sobel filter, and/or Prewitt operator.

Optionally this classical edge detector can be replaced by a deep learning approach (deep segmentation).

### Classification

Having all edge contours of the full image, representing the area of the sheet metal, the large image will be cropped to smaller images which have a resolution that is supported by the used neural network NN.

Those crops can then be classified using a machine learning algorithm. Preferably this machine learning algorithm is a deep neural network potentially based on several convolutional and fully connected layers. In one embodiment, the algorithm is trained to distinguish between at least the following classes:
1. "Okay",
2. "Tape",
3. "Color/Marker",
4. "Rust",
5. "Scratch",
6. "Dirt/Moss",
7. "Oil", and
8. "Water", wherein classes 2 - 8 refer to "not okay" class.

At the same time or alternatively in a second classification step, in case an anomaly is detected, i.e. for class 2 - 8, a 2-stage classification can be applied where the severity of the anomaly is classified into e.g. 2 classes, like "heavy" and "weak". Alternatively, the identification probability can be used as an indication of the severity. E.g. probability >70% means "heavy" and from 50%-70% means "little".

In case a surface cleaning system is available, the procedure is adapted as for each anomaly a decision is made if the anomaly can be cleaned/removed or not, see Fig. 6.

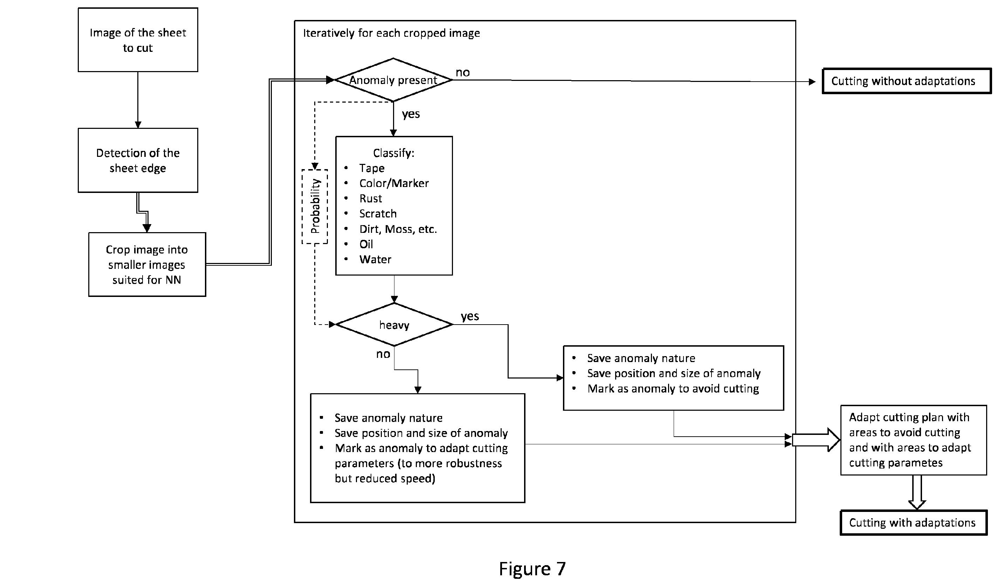

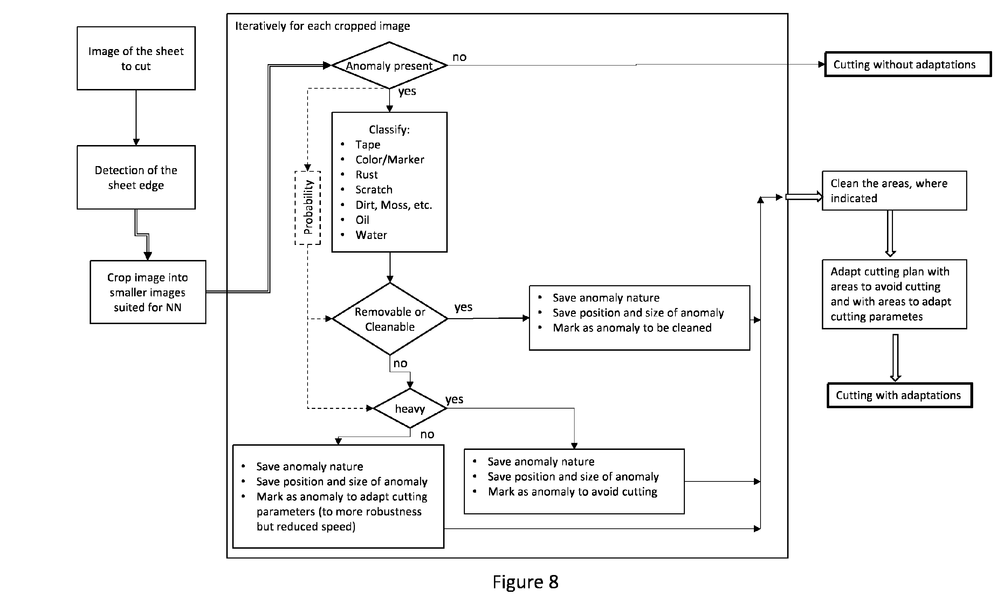

Alternatively, a 2-stage algorithm could be applied with the following steps, as can be seen in **Fig. 7** **and** **8****.**

In the embodiment shown in Fig. 7, no cleaning system 7 or removal system is provided. However, the countermeasure algorithm may still be applied, by e.g., adapting the cutting plan or the cutting parameters.
1. "Okay" detection, where anomalies in general are distinguished from "okay" regions. The big advantage here is, that an "okay" detection network (a.k.a. one class anomaly detection algorithm) can be trained only with "okay" images. This reduces the time for data acquisition and labeling significantly.
2. A Classification algorithm, where the identified anomalies from the first step are classified into the classes 2-8.

The Grad-CAM-based heatmap from anomaly detection in the first step can be used as localization of the anomaly in the cropped picture. This for example allows not only to know that there is a tape in the cropped image but also to know where the tape is within the image.

Further the classification probability from the first stage can be used as an indication of the severity of the anomaly (indicated as dashed line in Fig. 7 and 8).

### Data acquisition strategy

A general difficulty in data driven tasks is the acquisition of the many data, which are typically needed to develop the algorithms. For training neural networks, typically thousands of data points are needed to train models.

The use cases, presented here, pose a serious problem due to their infrequency and difficulty of recreating them manually. The recording of manual situations with the mentioned anomalies, which should be representative of possible future situations, seems almost impossible. Therefore, another creative approach with artificial data generation was chosen.

### Artificial data generation

The difficulty of acquiring real data necessary to train a machine learning model is facilitated by a simulation program, for instance Blender.

A CAD file of the cutting table may be imported in the simulation program's environment and the camera, lighting source and material to be cut, may be defined, e.g., via a user interface, UI. The CAD file may comprise geometric and position data, dimensions, type and/or thickness of the material to be processed, cutting paths, and/or laser processing instructions.

For the artificial or synthetic data generation, the user has complete control over the camera settings (exposure time, focus etc.), as well as the type of light source (e.g. spot, area, sun light etc.), its intensity and the material's color, texture, surface reflectivity. Subsequently, various simulations of different abnormal areas (with anomalies as listed above) on the sheet metal surface are generated. After that, the program renders an image of the state of the table/sheet, automatically generating the required data.

The suggested process, hence, provides an automatic way of producing a great amount of simulated data as close as possible to reality with great variability in terms of anomaly shape, intensity, lighting conditions, workpiece material, orientation etc. An additional advantage of the proposed methodology is the ease of acquisition of the labels for each one of the images taken. In fact, as the possible anomalies are randomly selected by the program they can simultaneously and automatically be accompanied with their respective labels. Thus, the labels are directly provided by the simulation algorithm, which saves a lot of time and helps avoiding manual labor which is also a source of mistakes.

### Domain adaptation / Transfer learning

Domain adaptation/confusion thus refers to the technique used to bring closer together the representations, in the latent space, of input data from two different domains, in our case the simulated and real-life scenario data. Generally, domain adaptation is a subset of transfer learning where the goal is to adapt a model trained on a source domain to perform well on a target domain, despite differences in data distribution. This technique is particularly useful when the data from the target domain (the domain where the data we want to use the trained model on) are few (Few Shot Domain Adaptation) and/or unlabeled or sparsely labeled. This is because the domain gap is usually being bridged with image features inherent to the data of the two domains which makes the process insensitive to the data's labels and/or the lack thereof. Examples of other techniques potentially having the same effect are histogram matching, or the addition of photorealistic noise (to the generated images).

When implementing the solution, proposed herein with the above mentioned data acquisition process or pipeline into a real-life scenario, there needs to be a way to account for the gap between the simulated data generated/acquired by the afore-mentioned process and the real ones. To tackle this issue there are several widely used techniques such as domain adaptation, synthetic-to-real data translation, transfer learning / fine tuning.

Generally, synthetic-to-real data translation using Generative AI (genAl) involves transforming data (which may be generated by artificial intelligence or may be taken by an optical sensor) into forms that resemble real-life scenario data (sheet material surface data with or without anomalies). This process is crucial in various applications, such as enhancing training data for machine learning models, creating realistic simulations, and improving data quality for analytical purposes. For the generation of synthetic data various techniques may be applied, including random sampling, statistical modeling, and generative models like GANs (Generative Adversarial Networks) and VAEs (Variational Autoencoders).

Further, synthetic-to-real data translation is another technique used to bring the two different types of data closer together, only this time working on the image space and not the feature space created by passing the input data through the network. In effect, a new model is used (usually a Generative Adversarial Network, GAN) to transform the simulated data into their real-world counterpart. After processing all the images in the dataset created by the simulations a whole new dataset of real-world data is created to then be used to retrain the model with them too (or just train from scratch for the first time).

Finally, transfer learning or fine-tuning use some extra real data to train only a few layers (usually the last fully connected ones) of the pretrained model while keeping the weights of the rest of the neurons frozen. This way the model keeps the main function of breaking down the input images in their features while refining its capability of predicting the labels for the real-world data it has not seen previously. The main disadvantage of this approach is its requirement for a significant amount of data to fine tune the model which makes it an obstacle for the use case described herein.

### Training learning and inference with neural networks

The different neural networks which are mentioned above are trained using state of the art techniques including data augmentation, batch processing, attention mechanisms, gradient decent optimization for weight adaption etc.

The proposed mounting of the camera to an already existing loading system or alternatively the stationary mounting of the camera to the cutting cell CC so that the moving table 2 can pass underneath is a very economical solution and do not need new moving devices and have thus a notable cost advantage. By moving the camera over the table (or vice versa), a good resolution of the imaged sheet metal is feasible with only a moderate camera performance. Further, it is worth mentioning that the anomaly detection well before cutting opens more flexibility how to treat detected anomalies. Particularly the anomaly removal and/or cutting plan adaption becomes feasible therewith.

Finally, with the proposed data acquisition strategy, development time can be saved, and the strategy also provides very generally valid algorithms. The final classification software can manage the detection of many anomalies of relevance.

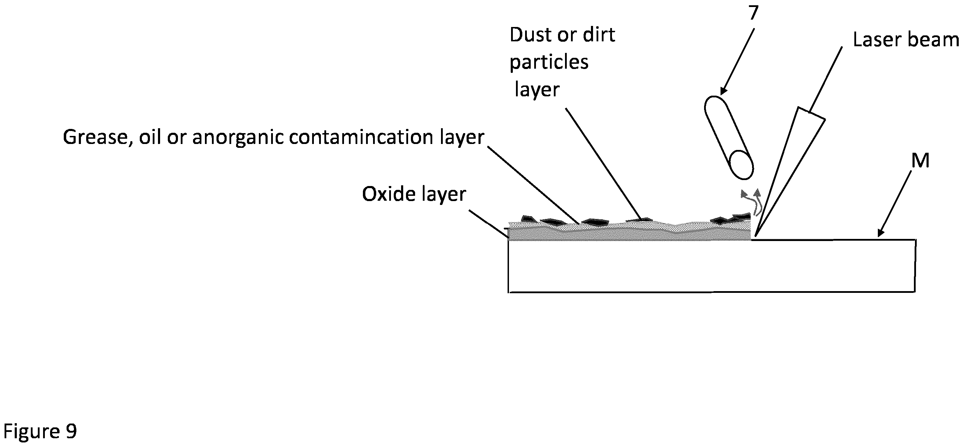

**Figure 9** schematically illustrates a cleaning system 7, in this example, a cleaning system 7 with a laser. As can be seen, the material to be cut M may be covered with an oxide layer (partially with release agents), with a grease, oil and/or anorganic contamination layer and/or with a dust and/or dirt particles layer. Dust, dirt particles, grease, oil and/or rust (=oxide layer) can be burnt and/or ablated. Typically, a suction tool is placed close to the ablation process to suck the ablated material.

Alternatively or in addition, another cleaning system 7such as mechanical systems, e.g., with brushes may be used.

Alternatively or in addition, another cleaning system 7, e.g., a cleaning robot, may be used which is separate from the laser processing machine.
- A closed-loop control can be established in case of the availability of a surface cleaning system 7. In case of cleaning/removing an anomaly, a closed loop can be realized with the camera system. Cleaning/removing is done until the anomaly is removed.
- Most important is the detection from sheet anomalies from above. Firstly, because cutting is more sensitive to these defects as the laser entering point is there. Secondly, anomalies as tapes, colors, markers, water, oil are more likely to be present on top of the sheet. Tapes, colors, markers will hardly be applied from humans from below. And water, oil rather adheres to the top. Nevertheless, let us mention that in order to detect also anomalies from the bottom side of the sheet, it is conceivable to add camera(s) looking from below onto the sheet to be cut.

Deep neural networks act as a multidimensional global approximator that can learn any mapping from one high dimensional distribution to another. This problem setup requires the use of multiple networks responsible for different computer visions tasks, namely Image Classification, and Image Segmentation etc. The input for each network should either be a full resolution image or a cropped region of the full image.

The process of working with deep learning consist of two main parts, namely training and inference. Training of neural networks deserves special attention and is therefore discussed in more detail in the following section.

A broad explanation of the procedure for any of these use-cases involves image capturing, image labeling, image preprocessing and network training. First an image is captured with a vision-based sensor (in this case a 2D-Camera). This camera is placed above the cutting table facing the table. The camera should be mounted in a way, that the camera's focal plane is parallel to the cutting table. In a next step the captured images are labeled with the corresponding labels. The artificial data generation as described in this invention allows to automize this labelling process as well as the tedious and time-consuming image acquisition process.

Further, the images are cut to have the resolution that the current network supports, and the individual cuts of the image are augmented using data augmentation techniques. The data augmentation consists of moderate changes in brightness, saturation, rotation, translation, zoom, color jitter, flip, and contrast, which are applied to the image. Linear combinations of multiple images are used to further augment the data (MixUp). The data augmentations are selected by sampling different combinations following a uniform distribution. Here it is worth noting, that the data used in this application involves the use of different materials at different locations in different environments. The majority of this data is obtained by simulation. Unifying this fact with data augmentation leads to a network which is robust against changes in environment and can hence be used on any sheet surface and machine anywhere. In the last step these images are used as input for the network's training.

During network training the network will pass the image through its layers and learn to extract the important information of the image for the task at hand. This is repeated for each layer in the network until the information has been compressed such that it can be used as a prediction. This process can be further described by the fact that networks are only a composition of numbers. These numbers are randomly sampled following a specific distribution, leading to a good backpropagation of the gradients while training. During this training the network will incrementally change the values of certain numbers which changes the behavior of the network. If given enough data and training time, the model will be able to find the optimal numbers which lead to a full analysis of the input. In our case, the input is an image which is analyzed with convolution-based networks. During training the network will only use labeled data.

After training has finished, the networks performance is measured by its accuracy on unseen data. When a satisfactory level of accuracy has been reached the weights of the network will be frozen and the network will be implemented in this frozen state. In any application the network's weights will not be changed anymore. The network will be used as a pretrained tool for analysis of any sheet surfaces. We propose customers will not have access to the model's weights but will interact with the model via interfaces. The required computational power can either be provided locally by a computational unit or via cloud computing services such as Microsoft Azure or Google Cloud.

During inference an image of the cutting table is taken and cropped into the correct resolution. When inferring on any input, no labeling of the data is needed. The image crops are then input into the trained network, which predicts on the input. Since the weights of the network are frozen, the network will not use this data to update its weights. After the network has made a prediction on a given input, the next input can be fed into the network. This can also be parallelized with batches of images that are being processed at the same time by the model and thus making the process even quicker. From now on, the network can be used as a mapping tool that maps inputs to predictions.

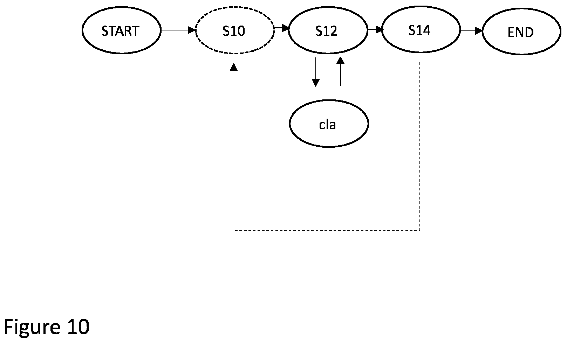

**Fig. 10** is a flow chart of a detection method according to an embodiment of the present invention. After start of the method, in step S10 image data of the material M to be processed, in particular sheet metal, captured by means of an input interface ii to an optical sensor system 1 is received. In step S12 the received image data is processed by using a classification algorithm cla embedded in a trained neural network (NN). Thereinafter, in step S 14, a classification result cr is provided on an output interface oi. The detection method may be executed prior to cutting, in particular, outside the cutting cell and before the sheet metal is loaded in the cutting cell.

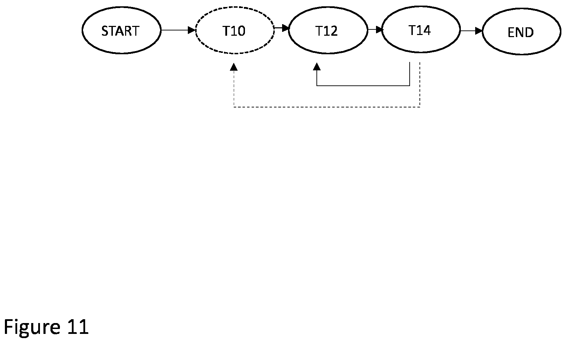

**Fig. 11** is a flow chart of a training method according to an embodiment of the present invention. After start of the training method, in step T10, which is optional, setting data for setting the image data generation in the next step, in particular a CAD file with environmental data of the laser processing machine L may be received. In step T12, a training-data generation algorithm may be applied for rendering a set of images for each class of a set of classes. In step T14, synthetically generated training data may be provided as a result of the applied training-data generation algorithm, comprising rendered images with respective labels. The training-data generation algorithm may be repeatedly or the method may end.

A processing device PD is configured to be used in or for a laser processing machine L. The processing device PD may be an electronic device or computing unit. The processing device PD may comprise a processor P. The processor P is adapted to execute the detection method described above in any of the mentioned different embodiments or alternatives. The processing device PD may comprise an input interface ii, which provides a data connection between the (internal or external) optical sensor system 1 and the processor P. Further, the processing device PD may comprise an output interface oi configured for providing the classification result cr determined by the processor P.

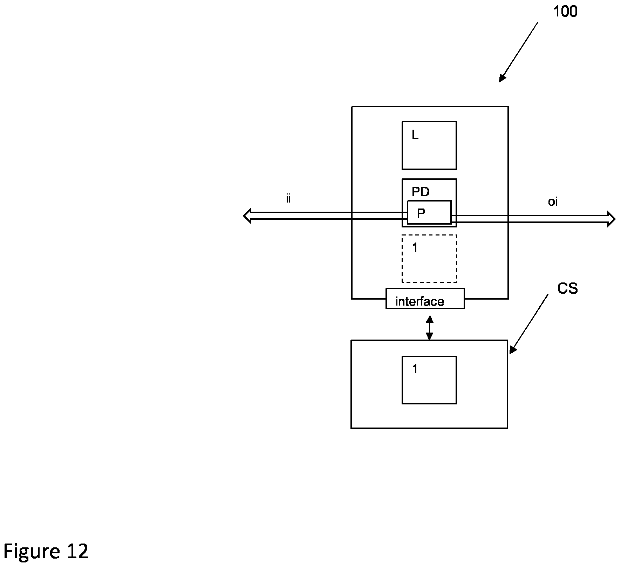

**Fig. 12** is a schematic block diagram of a laser processing system 100 with a processing device PD, like a laser cutting machine, according to an embodiment of the invention. As can be seen, the laser processing system 100 may comprise the laser processing machine L and a (electronic) processing device PD, which was described above and an optical sensor system 1 or an interface to the optical sensor system 1. The optical sensor system 1 may be part of or comprised in the laser processing system 100 or may be provided as separate system which is in data connection to the laser processing system via an interface. For example, the optical sensor system 1 may be a mobile camera or a camera mounted on a support system.

As can be seen in Fig. 12, in an optional embodiment, the laser processing system 100 may comprise a cleaning system 7. The cleaning system 7 is configured to clean the surface of the metal sheet. E.g., it can be a laser or a mechanical system, such as a brush-based system.

## Claims

1. A **detection method** for detecting anomalies on the material (M) to be processed by a laser processing machine (L), comprising the following method steps:
- Receiving (S10) image data of the material (M) to be processed captured by means of an input interface (ii) to an optical sensor system (1);
- Processing (S12) the received image data by using a classification algorithm (cla) embedded in a trained neural network (NN);
- Providing (S14) a classification result (cr) on an output interface (oi).

2. The method according to claim 1, wherein the optical sensor system (1) is mounted such that it is movable relative to the material (M), to be processed.

3. The method according to any of the preceding claims, wherein the optical sensor system (1) is mounted outside a laser processing cell (LPC) and/or wherein the optical sensor system (1) is mounted on a mounting device, wherein the mounting device may be arranged on a robot, a cleaning system (7) and/or a loading system, in particular a movable robot, a movable cleaning system (7) and/or a movable loading system.

4. The method according to any of the preceding claims, wherein the optical sensor system is mounted above a support table so that at least one of the following criteria is/are met:
- Image(s) captured with the optical sensor system (1) cover(s) the complete support table,
- The field of view of one camera of the optical sensor system is larger than 100cm2,
- The field of view of the optical sensor system is larger than 1000cm2,
- The image pixel size is larger than 0.1mm and/or
- The scanning speed for scanning the complete support table is larger than 0.1m2/s.

5. The method according to any of the preceding claims, wherein the classification result (cr) comprises a classification type and optionally a severeness score and/or optionally an anomaly size and/or optionally an anomaly position and/or optionally a removability score.

6. The method according to any of the preceding claims, wherein the classification algorithm (cla) is configured to provide the classification result (cr), in particular with at least two different classes: with anomaly, no anomaly.

7. The method according to any of the preceding claims, wherein the classification algorithm (cla) may be configured to provide a classification result (cr) with more than two classes, in particular classes selected from the group comprising: a tape class, a marker class, a rust class, a scratch class, a dirt class, an oil class and/or a water class.

8. The method according to any of the preceding claims, wherein the classification result (cr) is used to control an anomaly countermeasure algorithm (cou).

9. The method according to the directly preceding claim, wherein the anomaly countermeasure algorithm (cou) comprises at least one of:
- An anomaly removal function,
- A machine stop function and optionally providing information to the operator,
- A material exchange function, for triggering exchange of the material, in particular, automatic exchange,
- An adaption of the processing plan and/or
- An adaption of processing parameters of the laser processing machine (L).

10. The method according to any of the preceding claims, wherein the received image data are pre-processed, in particular by applying an edge detection algorithm, more in particular a classical image-based edge detection algorithm and/or a deep learning algorithm.

11. The method according to any of the preceding claims, wherein the method comprises:
- Using a gradient-weighted class activation mapping technique, Grad-CAM, for determining regions in an image, represented in the received image data, which have been proofed by the method, in particular by the classification algorithm to contribute most to the anomaly detection.

12. **A processing device** (PD) to be used for a laser processing machine (L), comprising:
- A processor (P) which is adapted to execute the method according to any of the preceding claims;
- An input interface (ii), which provides a data connection between an optical sensor system (1) and the processor (P);
- An output interface (oi) configured for providing the classification result (cr) determined by the processor (P).

13. **A training method** for training the neural network (NN) to be used in a detection method according to any of the preceding method claims, wherein the training data, comprising a set of labelled images, are synthetically and automatically generated, comprising the steps of:
- Optionally: Receiving (T10) setting data for setting the image data generation in the next step, in particular a CAD file with environmental data of the laser processing machine (L);
- Applying (T12) a training-data generation algorithm for rendering a set of images for each class of a set of classes;
- Providing (T14) synthetically generated training data as a result of the applied training-data generation algorithm, comprising rendered images with respective labels.

14. The training method according to claim 13, wherein the training method and in particular the step of providing (T14) synthetically generated training data uses a transfer learning algorithm (tla) to adapt the model trained in a source domain to a target domain with image data acquired from the optical sensor system.

15. **A laser processing system (100),** comprising:
- A laser processing machine (L) and
- A processing device (PD) according to claim 12,
- And an optical sensor system (1) or an interface to the optical sensor system (1).
